# EUROPEAN PATENT APPLICATION

(11) **EP 3 196 745 A1**
(43) Date of publication of application: **26.07.2017**
(21) Application number: 15842189.1
(22) Date of filing: 14.09.2015
(51) Int. Cl.: G06F 3/048, G09G 5/00, G09G 5/36, G09G 5/391

(54) **DISPLAY DEVICE, DISPLAY SYSTEM, AND DISPLAY CONTROL PROGRAM**

(30) Priority: 16.09.2014 JP 2014188028
(71) Applicant: Ricoh Company, Ltd., Tokyo 143-8555 (JP)
(72) Inventor: SUGIURA, Yoko, Tokyo 143-8555 (JP); KAMEKURA, Takahiro, Tokyo 143-8555 (JP); MANO, Takuro, Tokyo 143-8555 (JP); ISHIZU, Taeko, Tokyo 143-8555 (JP); AOKI, Shinji, Tokyo 143-8555 (JP)
(74) Representative: Watkin, Timothy Lawrence Harvey
(86) International application number: PCT/JP2015/076038
(87) International publication number: WO 2016/043161

(57) **Abstract**

[Object] To provide favorable viewing [Means of Achieving the Object] Including a determining unit configured to determine, based on a size of a first image represented by first image data, whether the first image is able to be displayed in a display region of the display device; a generating unit configured to generate, based on the first image data, second image data representing a second image that conforms with a size of the display region, in response to a determination that the first image is not able to be displayed in the display region; and a display unit configured to reproduce the second image data.

## Description

### [Technical Field]

The present invention relates to display devices, display systems, and display-control programs.

### [Background Art]

Conventionally, a display device for displaying images has had a function to enlarge or compress a displayed image (patent literature 1). Furthermore, as a type of such a display device, there has been a projector for projecting to display images, based on image data.

As for scaling-methods performed by a conventional projector for enlarging and compressing an image to be projected, there has been a method for executing scaling processing on a displayed image and a method for executing scaling processing on image data corresponding to an image to be projected.

### [Citation List]

### [Patent Literature]

[Patent document 1] Japanese Unexamined Patent Application Publication No. 2001-197365

### [Summary of Invention]

### [Technical Problem]

With respect to executing scaling processing on an image to be displayed, which is performed by a conventional projector, there has been a concern of deterioration in image quality in a case of, for example, enlarging a once-compressed image. Additionally, with respect to executing scaling processing on image data corresponding to an image to be projected, as performed by a conventional projector, there has been a concern of taking a long time for an image to be displayed, depending on data volume of the image data.

Thus, scaling processing of an image performed by a conventional projector may disturb favorable viewing for a user.

In view of such a matter as described above, the object of the disclosed technique is to provide favorable viewing.

### [Solution to Problem]

According to an embodiment, a display device is provided, the display device including: a determining unit configured to determine, based on a size of a first image represented by first image data, whether the first image is able to be displayed in a display region of the display device; a generating unit configured to generate, based on the first image data, second image data representing a second image that conforms with a size of the display region, in response to a determination that the first image is not able to be displayed in the display region; and a display unit configured to reproduce the second image data.

### [Advantageous Effects of Invention]

According to at least one embodiment, favorable viewing may be provided.

### [Brief Description of Drawings]

[FIG. 1] FIG. 1 is a drawing illustrating an example of a system configuration of a display system, according to a first embodiment;
[FIG. 2] FIG. 2 is a drawing for explaining overall processing performed by a display device, according to the first embodiment;
[FIG. 3] FIG. 3 is a drawing illustrating an example of a hardware configuration of the display device;
[FIG. 4] FIG. 4 is a drawing for explaining a functional configuration of the display device, according to the first embodiment;
[FIG. 5] FIG. 5 is a flowchart for explaining the processing performed by the display device, according to the first embodiment;
[FIG. 6] FIG. 6 is a drawing for explaining an example of a determination result of an image-size-determining unit;
[FIG. 7] FIG. 7 is a drawing for explaining the functional configuration of the display device, according to a second embodiment;
[FIG. 8] FIG. 8 is a flowchart for explaining the processing performed by the display device, according to the second embodiment;
[FIG. 9] FIG. 9 is a flowchart for explaining the processing performed by the display device, according to a third embodiment; and
[FIG. 10] FIG. 10 is a drawing for explaining an example of image data stored in a memory in image-projecting processing, according to the third embodiment.

### [Description of Embodiments]

### (First Embodiment)

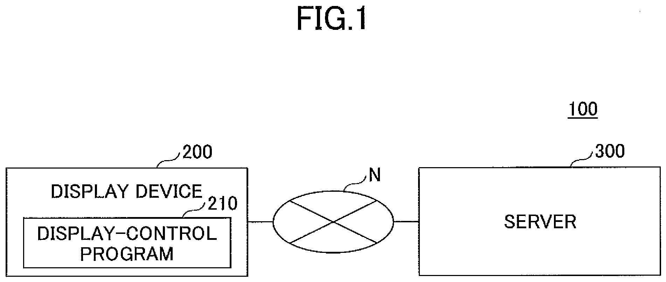

The following description explains the first embodiment, with reference to drawings. FIG. 1 is a drawing illustrating an example of a system configuration of a display system, according to the first embodiment. A display system 100 according to the first embodiment includes a display device 200 and a server 300. In the display system 100, the display device 200 and the server 300 are coupled to each other via a network N such as a local area network (LAN).

A display-control program 210 is installed on the display device 200. When the display-control program 210 is executed, the display device 200 acquires content data from the server 300, and displays content based on the content data, for a user to view the content.

The content data according to the first embodiment includes a single set of image data such as a photo as well as multiple sets of image data or video data provided as a slide-show for a user, etc. In the explanation of the first embodiment, video data is considered to be a compilation of (frames of) image data. In other words, the content data according to the first embodiment may include more than a single set of image data. Here, the content data may include sound data, etc., in addition to a single set of image data.

According to the first embodiment, for example, in a case where the size of an image to be displayed based on image data is larger than the display region of the display device 200, the display device 200 adjusts the size of the image into the size of the display region, and then stores the image data in a memory area. Then, upon receiving an instruction for scaling the image or for changing the resolution of the display region while displaying (or playing) content, etc., the display device 200 performs scaling processing by use of the image data stored in the memory area, to display the image.

According to the first embodiment, a user may be provided with favorable viewing of content data even though scaling processing of an image is performed, because image quality is maintained and an image is prevented from taking long time to be displayed, due to such a configuration.

Here, the display device 200 according to the first embodiment may be a projection device such as a projector, an electronic whiteboard, a digital signage, etc. In the following explanation of the first embodiment, the display device 200 is considered as a projector. Further, there is no limitation regarding the number of servers 300 for providing content data, even though there is only one server 300 in the display system 100 illustrated in FIG. 1.. Multiple servers 300 for providing content data may exist on the network N. The display device 200 may acquire desired content data from an arbitrarily selected server 300.

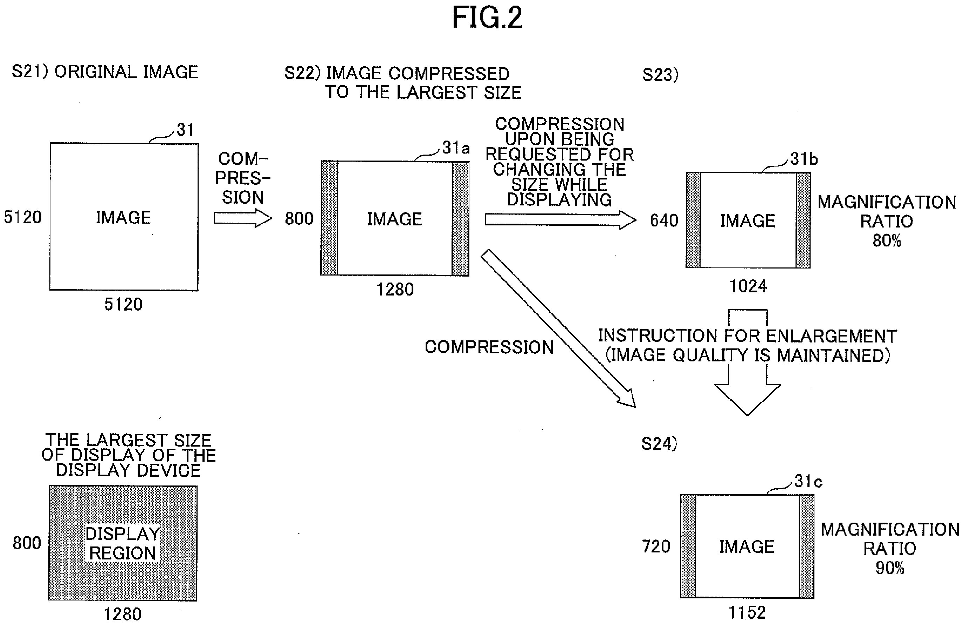

The following description explains processing performed by the display device 200 according to the first embodiment, with reference to FIG. 2. FIG. 2 is a drawing for explaining the overall processing performed by the display device according to the first embodiment.

In FIG. 2, the size of the display region (i.e. the projection region) of the display device 200 is 1280 × 800 [pixel], and the size of an image 31 represented by image data included in content data that is input to the display device 200 is 5120 × 5120 [pixel] (Step S21).

In such a case, the size of the image 31 is larger than the size of the display region of the display device 200 with respect to the widths and the heights. Thus, responding to reception of an instruction for displaying content, the display device 200 displays an image 31a which is obtained by compressing the image 31 into a size that is the largest possible to fit in the size of the display region of the display device 200. That is to say, the display device 200 generates image data representing the image 31a, based on the image data representing the image 31. Then, the display device 200 temporarily stores the image data representing the image 31a in a memory area (Step S22).

Specifically, the display device 200 performs compression regarding the image data representing the image 31, so that the height of the image 31a conforms to the height of the display region. Thus, the size of the image 31a is compressed into 800 × 800 [pixel]. Here, the image 31 and the image 31a have the same aspect ratios.

Here is an explanation of a case where a magnification ratio regarding the display region is set on the display device 200. In the example in FIG. 2, a case of setting the magnification ratio to 80 % is explained.

In a case of setting the magnification ratio to 80 % on the display device 200, the size of the display region of the display device 200 is scaled into 1024 × 640 [pixel]. Here, the display device 200 displays an image 31b, which is obtained by compressing the image 31a into 80 % of the size for conforming with the size of the display region. In other words, the display device 200 generates image data representing the image 31b, whose size is 640 × 640 [pixel], based on the image data representing the image 31a, and then performs projection to display the image 31b represented by the generated image data (Step S23).

In such a way, in a case of compressing the display region, the display device 200 according to the first embodiment generates, based on the image data representing the image 31a generated in advance, image data representing the image 31b to be displayed on the compressed display region. Thus, according to the first embodiment, with respect to scaling processing, the image 31b may be displayed quickly, i.e., time for the image 31b to be displayed is shortened, compared to a case of displaying the image 31b, based on the larger-sized image 31.

In the following is explained a case where the magnification ratio on the display device 200 is changed from 80 % to 90 %.

In a case where the magnification ratio is changed to 90% on the display device 200, the size of the display region is scaled into 1152 × 720 [pixel]. Here, the display device 200 displays an image 31c, which is obtained by scaling the image 31a to 90% of the size. In other words, the display device 200 generates, based on the image data representing the image 31a, image data representing the image 31c whose size is 720 × 720 [pixel], and then performs projection based on the generated image data (Step S24).

In such a way, even in a case where a setting for enlarging the display region is provided after the display region is compressed, the display device 200 according to the first embodiment generates the image data representing the image 31c, based on the image data representing the image 31a generated in advance. Therefore, according to the first embodiment, with respect to the scaling processing, deterioration in image quality of the image 31b may be prevented, compared to a case of magnifying the image 31c, which is obtained by compressing the image 31, in order to display the image 31b.

As described above, in a case of performing scaling of the display region, the display device 200 according to the first embodiment is capable of shortening the time for an image to be displayed and maintaining image quality, which provides favorable viewing for a user.

Here, although a case of changing the size of the display region in scaling processing is explained in the example in FIG. 2, the same manner applies for a case of performing scanning of an image.

For example, in the state of Step S22, in a case of receiving an instruction for compressing the image 31a into 50 % of the size while maintaining the size of the display region, the display device 200 generates image data representing an image in accordance with the instruction, based on the image data representing the image 31a, and then displays the image in the display region of Step S22.

Furthermore, in a case of subsequently receiving an instruction for enlarging the image, which was compressed into 50 % of the size, into 80 % of the size, the display device 200 generates, based on the image data representing the image 31a, image data representing an image whose size is scaled by the magnification ratio of 80 % while maintaining the size of the display region, and then displays the image in the display region of Step S22.

In the following explanation, an expression "changing the size of an image to be displayed" includes both of processing of changing the size of the display region and processing of changing the size of an image to be displayed on the display region.

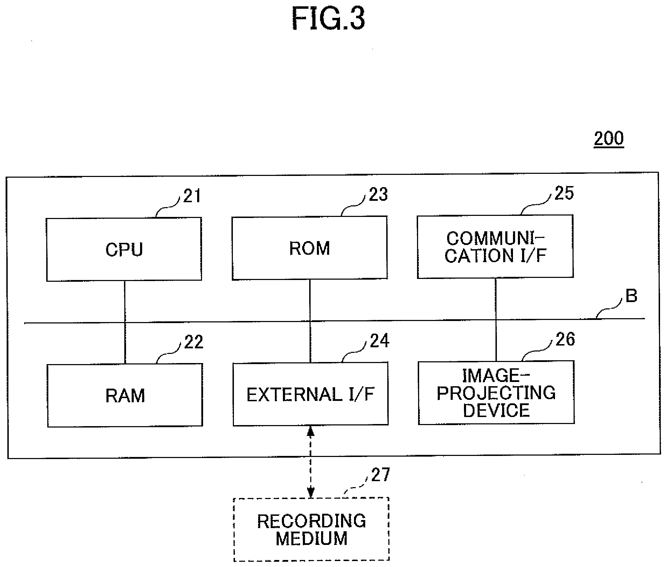

The following description explains a hardware configuration of the display device 200 according to the first embodiment, with reference to FIG. 3. FIG. 3 is a drawing illustrating an example of the hardware configuration of the display device.

The display device 200 according to the first embodiment includes a central processing unit (CPU) 21, a random access memory (RAM) 22, a read-only memory (ROM) 23, an external interface (I/F) 24, a communication I/F 25, an image-projecting device 26, etc., which are mutually connected via a bus B.

The CPU 21 is a processor that retrieves programs and data from a memory device such as the ROM 23 onto the RAM 22, in order to execute processing for performing overall control of the display device 200 and actualizing functions of the display device 200.

The RAM 22 is a volatile semiconductor memory (i.e. a memory device) for temporarily storing programs and data. The data temporarily stored in the RAM 22 includes image data to be displayed by the display device 200. In other words, the RAM 22 functions as an image-memory that stores image data representing an image to be displayed by the display device 200.

The ROM 23 is a non-volatile semiconductor memory (i.e. a memory device) capable of storing programs and data even when the power is turned off.

The external I/F 24 is an interface to an external device. The external device may be a recording medium 27, etc. The recording medium 27 is capable of storing content data to be reproduced by the display device 200 and programs for actualizing the embodiment. The display device 200 is capable of performing read/write processing on the recording medium 27 via the external I/F 24.

The recording medium 27 may be a universal serial bus (USB) memory, a secure digital (SD) memory card, etc. The recording medium 27 may be a digital versatile disk (DVD), a compact disk (CD), a flexible disk, etc., as well.

The communication I/F 25 is an interface for connecting the display device 200 to the network N. Thus, the display device 200 is capable of performing data transmission via the communication I/F 25. That is to say, the display device 200 is capable of acquiring content data from the server 300 via the communication I/F 25.

The image-projecting device 26 is a device constituted by an optical unit formed by optical parts such as a lens and mirror and by a light source such as a mercury lamp, which performs projection based on image data stored in the RAM 22 (i.e. the image-memory), etc.

The display device 200 according to the first embodiment is capable of performing a variety of processing as described below, due to the above-described hardware configuration.

Here, explanation of a hardware configuration of the server 300 according to the first embodiment is omitted, as the configuration is similar to that of computers in general that have a CPU and a memory.

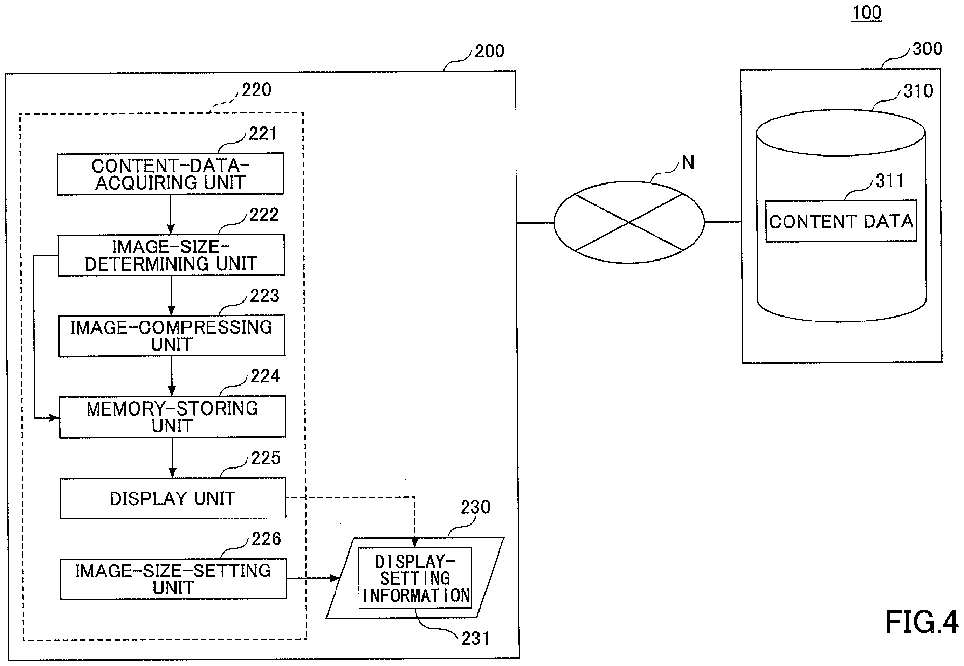

The following description explains a functional configuration of the display device 200 according to the first embodiment. FIG. 4 is a drawing for explaining the functional configuration of the display device according to the first embodiment.

The display device 200 according to the first embodiment includes a display-control-processing unit 220, which is actualized by the display-control program 210, and a memory area 230.

The display-control-processing unit 220 includes a content-data-acquiring unit 221, an image-size-determining unit 222, an image-compressing unit 223, a memory-storing unit 224, a display unit 225, and an image-size-setting unit 226. Furthermore, the display device 200 includes display-setting information 231, which is stored in the memory area 230.

The content-data-acquiring unit 221 acquires content data 311 stored in a content database 310 provided on the server 300. Here, the content-data-acquiring unit 221 may acquire the content data 311 from the recording medium 27.

The image-size-determining unit 222 determines whether the size of an image represented by image data, which is included in the content data 311, is larger than the size of the display region of the display device 200. That is to say, the image-size-determining unit according to the first embodiment determines whether an image represented by image data that is input to the display device 200 fits in the display region, referring to the size of the image. Here, the size of an image is represented by the number of pixels in a line and the number of lines relative to a given resolution.

The image-compressing unit 223 generates image data representing an image in a compressed size, based on a determination result of the image-size-determining unit 222.

The memory-storing unit 224 stores, in the RAM 22 (i.e. the image-memory), either one of image data generated by the image-compressing unit 223 or image data included in the content data 311 that is acquired by the content-data-acquiring unit 221, based on a determination result of the image-size-determining unit 222.

The display unit 225 performs projection, by means of the image-projecting device 26, based on image data stored in the RAM 22 (i.e. the image-memory), in accordance with the below-described display-setting information 231.

The image-size-setting unit 226 sets the size of an image to be displayed by the display unit 225. That is to say, upon receiving an instruction from a user for scaling the display region of the display device 200 along with a designated magnification ratio, the image-size-setting unit 226 according to the first embodiment stores the designated magnification ratio as the display-setting information 231. Further, the image-size-setting unit 226 according to the first embodiment may set the size of the display region (i.e. the projection region). In a case where the size of the display region is changed, the size of an image is changed in accordance with the size of the display region.

The display-setting information 231, which is stored in the ROM 23, etc., includes setting information that includes a magnification ratio of the display region or of an image to be displayed by the display unit 225. Here, the display-setting information 231 may include a variety of setting information relating to a display condition of image data to be reproduced by the display unit 225 (e.g. setting information for adjusting brightness for reproducing image data, etc.).

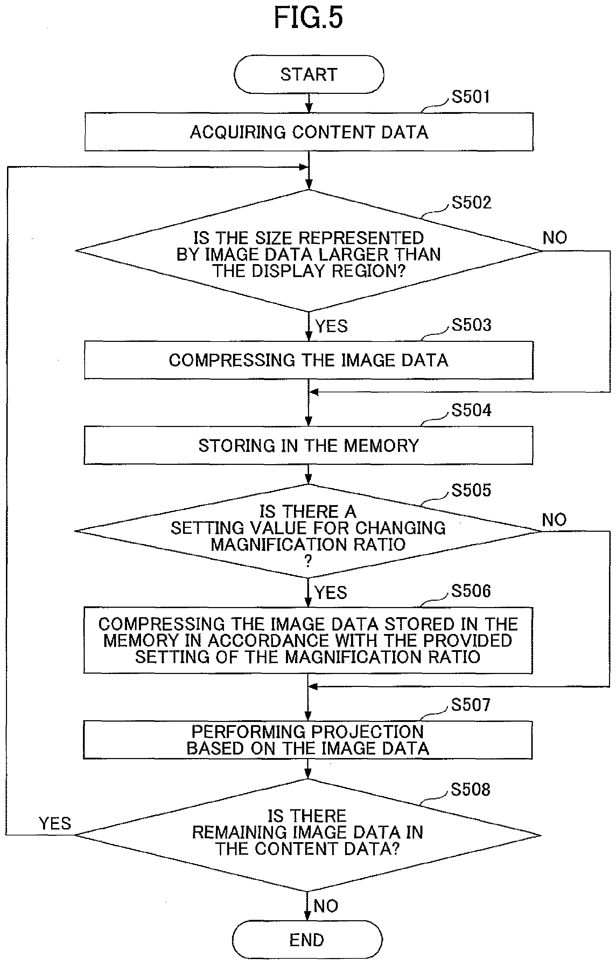

The following description explains details of processing performed by the display system 100 according to the first embodiment. FIG. 5 is a flowchart for explaining the processing performed by the display device 200 according to the first embodiment.

The display device 200 according to the first embodiment acquires content data 311 from the content database 310 provided on the server 300, by means of the content-data-acquiring unit 221 (Step S50).

Upon receiving an instruction for reproducing the content data 311, the image-size-determining unit 222 provided on the display device 200 determines whether the size of an image represented by image data included in the content data 311 is larger than the size of the display region of the display device 200 (Step S502). Here, in a case where the content data 311 includes multiple sets of image data, the image-size-determining unit 222 performs the above-described determination on each set of image data. Step S502 is explained in detail in the following description.

At Step S502, in a case where the size of the image is smaller than the size of the display region, the display device 200 proceeds the processing to below-described Step S504.

At Step S502, in a case where the size of the image is larger than the size of the display region of the display device 200, the display device 200 compresses the image represented by the image data into a size that is the largest possible to fit in the display region, by means of the image-compressing unit 223 (Step S503). In other words, the image-compressing unit 223 compresses the image represented by the image data into a size, so that at least one of the height or width of the image represented by the image data conforms with respective one of the height or width of the display region of the display device 200.

Then, the memory-storing unit 224 provided on the display device 200 stores the image data in the RAM 22 (i.e. the image-memory), based on the determination result of the image-size-determining unit 222 (Step S504). At Step S504, in the case where the size of the image is determined to be smaller than the size of the display region at Step S502, the memory-storing unit 224 stores the image data included in the content data 311 directly in the image-memory. Furthermore, in the case where the size of the image is determined to be larger than the size of the display region at Step S502, the memory-storing unit 224 stores, in the image-memory, the image data representing the compressed image obtained at Step S503.

Then, the display unit 225 provided on the display device 200 determines whether a magnification ratio is changed, referring to the display-setting information 231 (Step S505). In other words, the display unit 225 determines whether an operation for changing the magnification ratio has been performed by a user, etc., by means of the image-size-setting unit 226, since the previous instance of displaying an image.

Specifically, for example, it is determined that the magnification ratio is changed, in such a case where the magnification ratio included in the display-setting information 231 is 80 %, and the magnification ratio for reproducing image data directly beforehand was 100 %.

In a case of determining, at Step S505, that the magnification ratio is not changed, the display device 200 proceeds the processing to below-described Step S507.

In a case of determining, at Step S505, that the magnification ratio is changed, the display device 200 compresses the image represented by the image data stored in the image-memory, by means of the image-compressing unit 223, in accordance with the magnification ratio included in the display-setting information 231 (Step S506).

For example, in a case where the magnification ratio is 80 % with respect to a size of the image represented by the image data of 800 × 800 pixels, the image-compressing unit 223 generates, based on the image data stored in the image-memory, image data representing an image in a size of 640 × 640 pixels.

Then, the display device 200 performs projection based on the image data, by means of the display unit 225 (Step S507). At Step S507, in the case of determining that the magnification ratio is changed at Step S505, the display unit 225 projects the image represented by the image data generated at Step S506. Further, in the case of determining, at Step S505, that the magnification ratio is not changed, the display unit 225 projects the image represented by the image data stored in the image-memory.

Then, the display device 200 determines whether the content data 311 includes another set of image data (Step S508). In a case of determining, at Step S508, that no other set of image data is included, the display device 200 terminates the processing. In a case of determining, at Step S508, that another set of image data is included, the display device 200 returns the processing to Step S502.

Here, in the first embodiment, the above-described processing of Steps S502 through S504 and processing of Steps S505 through S507 may be performed in a parallel manner. That is to say, for example, in a case where multiple sets of image data are included in the content data 311, the display device 200 may perform the processing of Steps S505 through S507 on a set of image data while performing the processing of Steps S502 through S504 on another set of image data to be reproduced after the preceding set of image data.

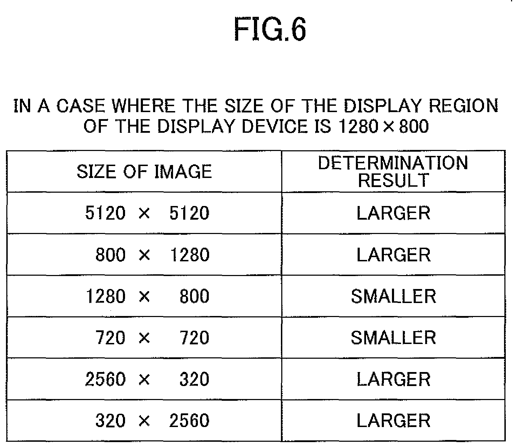

The following description further explains the determination performed by the image-size-determining unit 222 at Step S502 in FIG. 5, with reference to FIG. 6. FIG. 6 is a drawing for explaining an example of the determination result of the image-size-determining unit.

In FIG. 6, a case where the size of the display region of the display device 200 is 1280 × 800 [pixel] is explained.

In the first embodiment, the image-size-determining unit 222 determines that an image is "larger" than the display region, in a case where at least one of the number of pixels in the horizontal direction (i.e. width) and in the vertical direction (i.e. height) of the image represented by image data included in the content data 311 is larger than the number of pixels in the horizontal direction and in the vertical direction of the display region of the display device 200. In other words, an image is determined to be "smaller" than the display region, in a case where the number of pixels in the horizontal direction and in the vertical direction of the image represented by image data included in the content data 311 are smaller than the number of pixels in the horizontal direction and in the vertical direction of the display region of the display device 200, respectively. Here, the horizontal direction refers to a direction that is horizontal with respect to a direction of lines of image data, whereas the vertical direction refers to a direction that is vertical with respect to the direction of lines of the image data.

As described above, according to the first embodiment, in such a case where the size of an image to be displayed by the display device 200 is larger than the size of the display region of the display device 200, the display device 200 generates image data representing an image, which is compressed into a size that is the largest possible to fit in the display region, and then stores the image data in the image-memory, as pre-processing. In such a way, upon receiving an instruction from a user, etc., for changing the magnification ratio (i.e. an instruction for enlargement or compression), the display device 200 scales the image data stored in the image-memory in accordance with the magnification ratio for reproducing the image data, so as to prevent deterioration in image quality of the reproduced image. Furthermore, according to the first embodiment, time for scaling an image may be shortened, compared to a case of scaling an image included in the content data 311 upon receiving an instruction for changing the magnification ratio. Thus, according to the first embodiment, time for displaying an image may be shortened.

As described above, a user may be provided with favorable viewing of displayed (or generated) content represented by the content data 311, according to the first embodiment.

### (Second Embodiment)

The following description explains the second embodiment, with reference to drawings. The second embodiment differs from the first embodiment in an aspect of considering a case where an image is displayed at a rotated angle. Thus, the following description regarding the second embodiment only explains the difference from the first embodiment. Explanation of elements having the same functional configurations as that of the first embodiment is omitted, assigning the elements the same reference symbols used in the explanation of the first embodiment.

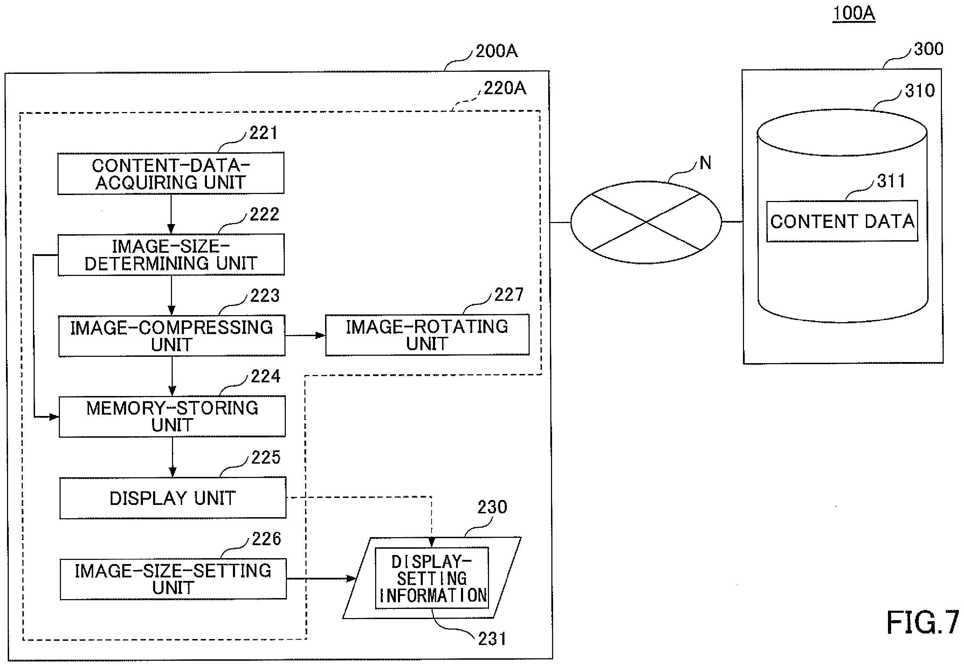

FIG. 7 is a drawing for explaining a functional configuration of a display device according to the second embodiment. In a display system 100A according to the second embodiment, a display device 200A includes a display-control-processing unit 220A.

The display-control-processing unit 220A according to the second embodiment includes an image-rotating unit 227, in addition to the units included in the display-control-processing unit 220 according to the first embodiment.

Furthermore, the display device 200A according to the second embodiment stores display-setting information 231A in the memory area 230.

The image-rotating unit 227 according to the second embodiment rotates an image represented by image data by a predetermined degree, based on the display-setting information 231A. Furthermore, the image-rotating unit 227 determines whether the content data 311 is video data.

The display-setting information 231A includes information for reproducing image data at a rotated angle by a predetermined degree (i.e. a rotation-display setting), etc., in addition to the magnification ratio of image data to be reproduced by the display unit 225. For example, the rotation-display setting is information for reproducing image data at an angle rotated to either the right or the left by 90 degrees, etc.

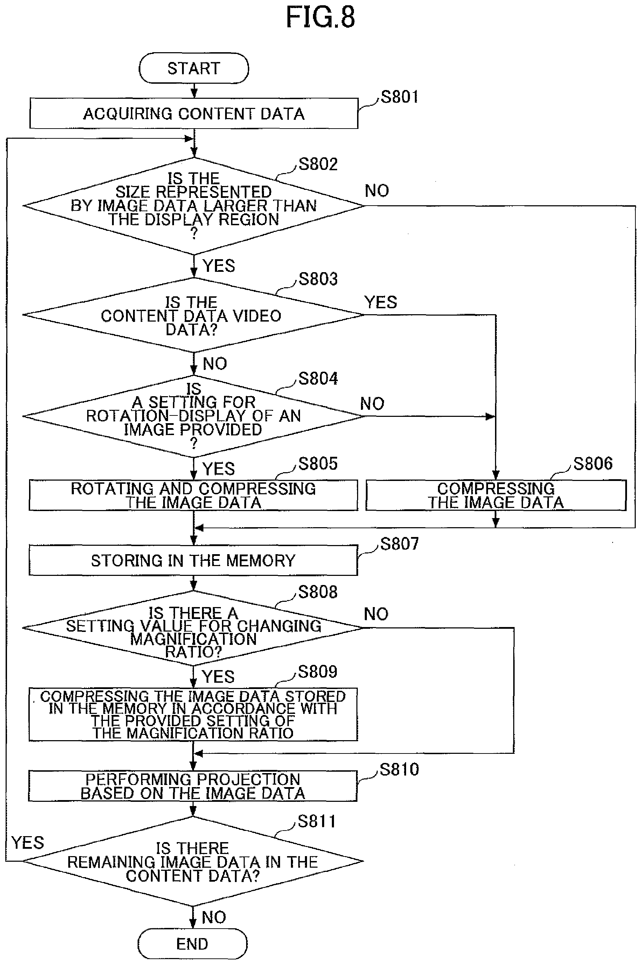

The following description explains processing performed by the display device 200A, with reference to FIG. 8. FIG. 8 is a flowchart for explaining the processing performed by the display device according to the second embodiment.

Explanation of processes at Steps S801 and S802 in FIG. 8 is omitted, as the processes are the same as the processes at Steps S501 and S502 in FIG. 5, respectively.

The image-rotating unit 227 provided on the display device 200A determines whether the content data 311 is video data (Step S803), for the reason that, in a case where the content data 311 is video data, it is not common for images (i.e. video) to be reproduced at a rotated angle by a predetermined degree. However, even in the case where the content data 311 is video data, images (i.e. video) may be reproduced at a rotated angle by a predetermined degree. In such a case, the determination processing of Step 803 is not performed.

In a case where the content data 311 is determined to be video data at Step S803, the display device 200A proceeds to below-described Step S806.

In a case where the content data 311 is determined not to be video data at Step S803, the display device 200A determines whether a rotation-display setting is provided, by means of the image-rotating unit 227, referring to the display-setting information 231A (Step S804).

In a case of determining, at Step S804, that the rotation-display setting is provided, the display device 200A, by means of the image-rotating unit 227 and the image-compressing unit 223, generates image data representing an image obtained by rotating the image included in the content data 311 by a predetermined degree in accordance with the rotation-display setting included in the display-setting information 231A, and by compressing the rotated image (Step S805).

The following description explains processing performed by the image-rotating unit 227. At Step S805, in a case where the rotation-display setting included in the display-setting information 231A is information for displaying an image at an angle of rotation to the left by 90 degrees, the image-rotating unit 227 generates image data for displaying the image at the angle of rotation to the left by 90 degrees. Further, the image-compressing unit 223 generates image data obtained by compressing the image represented by the image data generated by the image-rotating unit 227. The compression process performed by the image-compressing unit 223 is the same as the process at Step S503 in FIG. 5. Here, although the compression process performed by the image-compressing unit 223 is preceded by the rotation process performed by the image-rotating unit 227, the order may be reversed.

In a case of determining, at Step S804, that the rotation-display setting is not provided, the display device 200A compresses the first image (i.e. an image of the first frame) included in video data, by means of the image-compressing unit 223 (Step S806). The process for compressing image data at Step S806 is the same as the process at Step S503 in FIG. 5.

Then, the display device 200A stores image data in the image-memory, by means of the memory-storing unit 224 (Step S807), and then proceeds to Step S808. At Step S807, in a case where the size of the image represented by the image data included in the content data 311 is determined to be smaller than the size of the display region, the memory-storing unit 224 stores the image data included in the content data 311 directly to the image-memory.

Further, at Step S807, in a case where the content data 311 is video data; and the size of an image of the first frame is bigger than the size of the display region, the memory-storing unit 224 stores, in the image-memory, image data representing the frame image in a compressed size.

Further, at Step S807, in a case where the size of the image is larger than the size of the display region; the content data 311 is not video data; and the rotation-display setting is not provided, the memory-storing unit 224 stores, in the image-memory, image data representing an image in a compressed size.

Further, at Step S807, in a case where the size of the image is larger than the size of the display region; the content data is not video data; and the rotation-display setting is provided, the memory-storing unit 224 stores, in the image-memory, image data representing an image in a compressed size and at a rotated angle.

Explanation of processes at Steps S808 through S811 is omitted, as the processes are the same as the processes at Steps S505 through S508 in FIG. 5.

In the second embodiment, the rotation-display setting may be provided by a user, by means of a setting unit, and may be provided by means of a predetermined program. The predetermined program may be configured to determine whether to display an image represented by image data at a rotated angle, and then to provide a rotation-display setting on the display device 200A in accordance with a determination result. For example, in a case where there is a human (person) on an image represented by image data, the predetermined program may recognize the face of a person by means of a conventional art, and then rotate the image, based on a direction the person is facing.

It should be noted that, in the second embodiment, the display device 200 may determine whether the content data 311 is video data, even in such a case where the size of the image represented by the image data included in the content data 311 is smaller than the size of the display region of the display device 200. Then, the display device 200 may perform the processes at above-described Steps S804 through S806, in such a case where the content data 311 is determined not to be video data.

As described above, in the second embodiment, in such a case where an instruction for displaying an image at a rotated angle has been provided by a user, etc., the display device 200 generates image data representing an image at a rotated angle and in a compressed size, and then stores the image data in the image-memory, as pre-processing. In such a way, according to the second embodiment, in such a case where an instruction for displaying an image at a rotated angle has been provided by a user, etc., time for displaying an image may be shortened, and favorable viewing may be provided for the user.

### (Third Embodiment)

The following description explains the third embodiment, with reference to drawings. The third embodiment differs from the second embodiment in an aspect of generating, in pre-processing, multiple sets of image data based on which an image targeted for rotation, is reproduced at multiple different rotated angles. Thus, the following description regarding the third embodiment only explains the difference from the second embodiment. Explanation of elements having the same functional configurations as that of the second embodiment is omitted, assigning the elements the same reference symbols used in the explanation of the first embodiment.

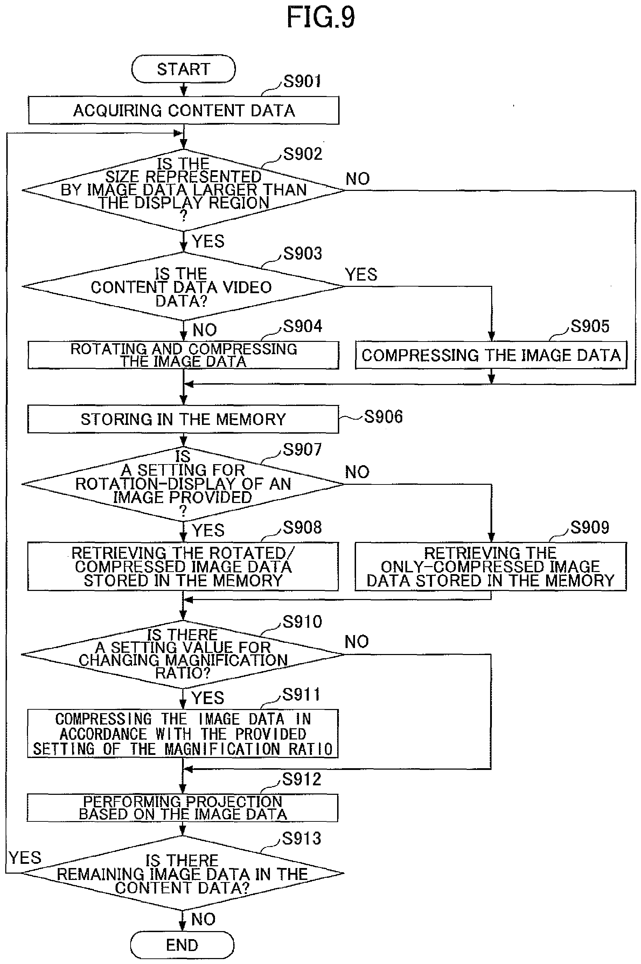

FIG. 9 is a flowchart for explaining processing performed by a display device according to the third embodiment.

Explanation of processes at Steps S901 through S903 in FIG. 9 is omitted, as the processes are the same as the processes at Steps S801 through S803 in FIG. 8, respectively.

In a case where, at Step S903, the content data 311 is determined to be video data, the display device 200A generates image data for reproducing an image at a rotated angle by a predetermined degree, by means of the image-rotating unit 227. Then, the image-compressing unit 223 generates image data obtained by compressing the image represented by the image data generated by the image-rotating unit 227 into a size that is the largest possible to fit in the display area of the display device 200 (S904), and then the display device 200A proceeds to Step S906.

The following description explains the rotation process and compression process according to the third embodiment. According to the third embodiment, the image-rotating unit 227 generates multiple sets of image data corresponding to images obtained by rotating the image targeted for rotation, to the left by 90 degrees, to the right by 90 degrees, and to either one of the right or left by 180 degrees, respectively. Then, the image-compressing unit 223 generates data corresponding to images obtained by compressing the images rotated by the image-rotating unit 227.

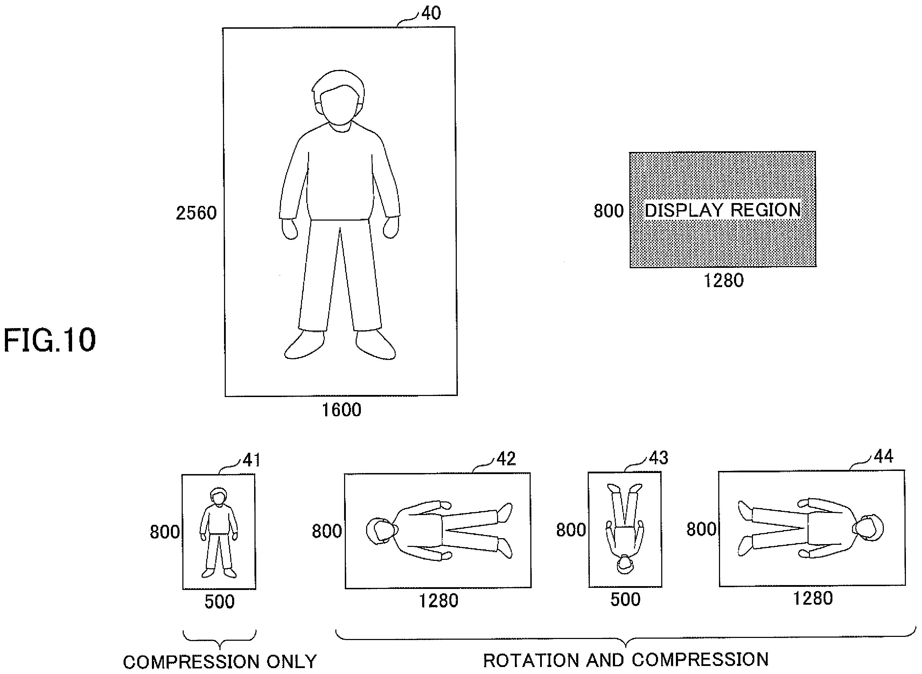

That is to say, according to the third embodiment, in a case of rotating an image, the display device 200A stores four patterns of image data corresponding to the image provided targeted for rotation, as described below with reference to FIG. 10.

In a case where the content data 311 is determined not to be video data at Step S903, the display device 200A proceeds to Step S905. Explanation of the process at Step S905 is omitted, as the process is the same as the process at Step S806 in FIG. 8.

Then, the display device 200A stores image data in the image-memory, by means of the memory-storing unit 224 (Step S906).

Then, the display device 200 determines whether the rotation-display setting is provided, referring to the display-setting information 231A, by means of the display unit 225 (Step S907).

In a case of determining, at Step S907, that the rotation-display setting is provided, the display unit 225 of the display device 200A retrieves, from among the image data store in the image-memory, the image data designated in accordance with the rotation-display setting included in the display-setting information 231A (Step S908). For example, in a case where the rotation-display setting is information for displaying an image at an angle rotated to the left by 180 degrees, the display unit 225 retrieves the image data as designated.

In a case of determining, at Step S907, that the rotation-display setting is not provided, the display unit 225 of the display device 200A retrieves the image data stored in the image-memory, which represents the image compressed to the size that is the largest possible to fit in the display region of the display device 200 (Step S909). For example, in such a case where the content data 311 is video data, the display unit 225 retrieves the image data representing the image compressed in the process at Step S905.

Explanation of a process at Step S910 is omitted, as the process is the same as the process at Step S808 in FIG. 8.

In a case of determining, at Step S901, that the magnification ratio is changed, the image-compressing unit 223 of the display device 200A compresses the image represented by the image data retrieved at above-described Step S908 or S909, in accordance with the magnification ratio included in the display-setting information 231A (Step S911).

Then, the display device 200A projects an image represented by image data, by means of the display unit 225 (Step S912). That is to say, in such a case of determining that the magnification ratio is changed at above-described Step S910, the display unit 225 projects the image represented by the image data generated at Step S911. Furthermore, in such a case of determining that the magnification ratio is not changed at Step S910, the display unit 225 projects the image represented by the image data retrieved at Step S908 or S909.

Explanation of a process at Step S913 is omitted, as the process is the same as the process at Step S811 in FIG. 8.

It should be noted that, according to the third embodiment, the display device 200A may determine whether the content data 311 is video data, even in a case where the size of an image represented by image data included in the content data 311 is smaller than the size of the display region of the display device 200A. Further, the display device 200A may then perform the process at above-described Step S904, in such a case where the content data 311 is determined not to be video data.

The following description explains the process at Step S904 in FIG. 9, with reference to FIG. 10. FIG. 10 is a drawing for explaining an example of image data stored in the memory, with respect to the processing performed by the display device 200A according to the third embodiment.

In FIG. 10, the image represented by the image data included in the content data 311 acquired at Step S901 in FIG. 9 is referred to as an image 40, and the size of the image 40 is 2560 × 1600 [pixel] . Further, in FIG. 10, the size of the display region of the display device 200A is 800 × 1280 [pixel].

According to the third embodiment, as illustrated in FIG. 10, the image-rotating unit 227 and the image-compressing unit 223 generates image data representing each of images 41, 42, 43, and 44, based on the image data representing the image 40.

The image 41 is an image obtained by scaling the image 40 into a size that is the largest possible to fit in the display region of the display device 200A. The image 42 is an image obtained by rotating the image 40 to the left by 90 degrees and then scaling the rotated image 40 into a size that is the largest possible to fit in the display region of the display device 200A. The image 43 is an image obtained by rotating the image 40 to the left by 180 degrees and then scaling the rotated image 40 into a size that is the largest possible to fit in the display region of the display device 200A. The image 44 is an image obtained by rotating the image 40 to the left by 270 degrees (or to the right by 90 degrees) and then scaling the rotated image 40 into a size that is the largest possible to fit in the display region of the display device 200A.

As described above, according to the third embodiment, the display device 200A generates image data representing an image obtained by scaling the image 40, as well as multiple sets of image data representing multiple images obtained by scaling the image 40 and rotating the compressed image by predetermined degrees, respectively, and then stores each set of the generated image data in the image-memory. In such a way, according to the third embodiment, in a case of receiving, from a user, etc., an instruction for rotating an image being displayed, which is based on image data stored in the memory, time for displaying an image may be shortened, and favorable viewing may be provided for the user.

The present invention is not limited to the embodiments disclosed specifically in the above description, and various variations and modifications may be made without departing from the scope of the claims.

The present international patent application claims the benefit of priority of Japanese Patent Application No. 2014-188028, filed on September 16, 2014, the contents of which are incorporated herein by reference in their entirety.

### [Reference Signs List]

- 100: display system
- 200: display device
- 21: CPU
- 22: RAM
- 23: ROM
- 24: external I/F
- 27: recording medium
- 25: communication I/F
- 26: image-projecting device
- 300: server
- 221: content-data-acquiring unit
- 222: image-size-determining unit
- 223: image-compressing unit
- 224: memory-storing unit
- 225: display unit
- 226: image-size-setting unit
- 310: content database
- 231: display-setting information
- 311: content data
- B: bus
- N: network

## Claims

1. A display device comprising:
a determining unit configured to determine, based on a size of a first image represented by first image data, whether the first image is able to be displayed in a display region of the display device;
a generating unit configured to generate, based on the first image data, second image data representing a second image that conforms with a size of the display region, in response to a determination that the first image is not able to be displayed in the display region; and
a display unit configured to reproduce the second image data.

2. The display device according to claim 1, wherein, upon receiving an instruction for changing a size of the second image, the generating unit generates third image data representing a third image in accordance with the instruction, based on the second image data.

3. The display device according to claim 1 or 2, wherein the generating unit generates the second image data such that the first image and the second image have a same aspect ratio.

4. The display device according to claim 1 or 2, wherein the determining unit determines that the first image is able to be displayed in the display region, in response to a condition where a height of the first image is equal to or shorter than a height of the display region and a width of the first image is equal to or shorter than a width of the display region.

5. The display device according to any one of claims 1 through 4, wherein the display unit reproduces the first image data, in response to a determination that the first image is able to be displayed in the display region.

6. The display device according to any one of claims 1 through 5, further comprising an image-rotating unit configured to determine whether the first image data is a part of video data, and configured to generate fourth image data representing a fourth image, in response to a determination that the first image data is not a part of video data, the fourth image corresponding to a rotated version of the first image.

7. The display device according to claim 6, wherein the image-rotating unit generates a plurality of sets of the fourth image data representing a plurality of versions of the fourth image that correspond to a plurality of rotated versions of the first image, respectively, the plurality of rotated versions being rotated at different angles.

8. A display system including a display device and a server for providing content data to the display device, the display system comprising:
a determining unit configured to determine, based on a size of a first image represented by first image data included in the content data, whether the first image is able to be displayed in a display region of the display device;
a generating unit configured to generate, based on the first image data, second image data representing a second image that conforms with a size of the display region, in response to a determination that the first image is not able in the display region; and
a display unit configured to reproduce the second image data.

9. A display-control program for causing a computer to perform processing, the processing comprising:
determining, based on a size of a first image represented by first image data, whether the first image is able to be displayed in a display region of a display device;
generating, based on the first image data, second image data representing a second image that conforms with a size of the display region, in response to a determination that the first image is not able to be displayed in the display region; and
reproducing the second image data.
